(19) **Europäisches Patentamt / European Patent Office / Office européen des brevets**

(11) **EP 1 484 863 B1**

(12) **EUROPEAN PATENT SPECIFICATION**

(45) Date of publication and mention
of the grant of the patent:
**26.03.2008 Bulletin 2008/13**

(51) Int Cl.:
*H04L 12/28* (2006.01)     *H04Q 7/38* (2006.01)

(21) Application number: **04013272.2**

(22) Date of filing: **04.06.2004**

(54) **Paging control apparatus, mobile node, paging control system and paging control method**

Funkrufsteuerungsvorrichtung, mobiler Knoten, Funkrufsteuerungssystem und Funkrufsteuerungsvefahren

Appareil de gestion de téléappels, noeud mobile, système de gestion de téléappels et procédé de gestion de téléappels

(84) Designated Contracting States:
**DE GB**

(30) Priority: **04.06.2003 JP 2003160004**

(43) Date of publication of application:
**08.12.2004 Bulletin 2004/50**

(73) Proprietor: **NTT DoCoMo, Inc.**
**Tokyo 100-6150 (JP)**

(72) Inventors:
• **Inoue, Masahiro,**
**I.P.D. NTT DoCoMo, Inc.**
**Tokyo 100-6150 (JP)**
• **Omae, Koji,**
**I.P.D. NTT DoCoMo, Inc.**
**Tokyo 100-6150 (JP)**

• **Okajima, Ichiro,**
**I.P.D. NTT DoCoMo, Inc.**
**Tokyo 100-6150 (JP)**
• **Umeda, Narumi,**
**I.P.D. NTT DoCoMo, Inc.**
**Tokyo 100-6150 (JP)**

(74) Representative: **GROSSE BOCKHORNI SCHUMACHER**
**Patent- und Rechtsanwälte**
**Elsenheimerstrasse 49**
**80687 München (DE)**

(56) References cited:
**EP-A- 1 304 835          WO-A-01/97549**
**US-A1- 2002 046 287**

EP 1 484 863 B1

**Description**

Field of the Invention

The present invention relates to a paging control apparatus, a mobile node, a paging control system, and a paging control method.

Related Background Art

In mobility management in a mobile communication system, a control node in a network designates a control zone, and a radio channel number or a radio channel code in accordance with a registered location of a mobile node. In this manner, the mobility management is closely linked to the location management and to the radio management control for ensuring connectivity.

The paging control technology handles mobile nodes in wide-ranging paging area units, thereby reducing a volume of signals concerning the location registration control and the radio management control. Namely, the paging control technology has an aspect of the mobility management in a broad sense and has been regarded as important as a means for implementing power saving in conjunction with intermittent reception technology by the mobile nodes. Such paging control technology is built by a control interface peculiarly defined for each individual system and is implemented by letting the control node in the network carry out management of paging states and paging areas.

On the other hand, extension techniques of Mobile IP (Internet Protocol)v4 have been proposed as location registration control techniques in mobile communication systems using the fast and broadband radio access technology. In such techniques, there exists a representative FA (Foreign Agent) among a plurality of FAs and the representative FA successively creates paging areas on the basis of subnet areas of FAs located under control thereof. The Seamoby working group of IETF (Internet Engineering Task Force) defines the IP paging to conduct paging control at the IF layer, and presents its problems and requirements.

As a technique of the same kind, there is a technique of carrying out the In-level paging control on Mobile IPv4. This technique is one in which a paging server creates paging areas in units of addresses of FAs and in which each FA recognizes a paging area ID and broadcasts it to nodes in a unit area. Document US 2002/0046287 A1 discloses different approaches for performing paging.

[Non-Patent Document 1]

RFC3132-"Dormant Mode Host Alerting ("IP Paging") Problem Statement" and RFC3154-"Requirements and Functional Architecture for an IP Host Alerting Protocol"

SUMMARY OF THE INVENTION

However, the above-described conventional technologies are based on the specific mobile communication systems or Mobile IPv4, but are not adapted for the other systems or for the extension techniques of Mobile IPv4. For example, in the case of the mobility management control adapted for the extension techniques of Mobile IP (fast handoff, lossless handoff, etc.), the mobile node or the control node has to perform a new control procedure and transmission/reception of a control signal. There is also another problem that it is not sure whether a packet directed to a mobile node in paging can be forwarded without loss.

Furthermore, the above conventional technologies require a network operator to fixedly or variably set paging areas, which places a heavy burden on the operator and which increases setting restrictions despite the IP techniques essentially permitting flexible setting. There still remains a drawback that the setup of paging areas across a plurality of paging control devices involves complicated procedure among the control devices.

The present invention has been accomplished in view of the above problems and an object of the present invention is to implement appropriate paging control in accordance with a communication state and an operation state of a mobile node.

In order to achieve the above object, a paging control apparatus according to the present invention, which carries out management of paging states and paging areas in accordance with a state of a mobile node, comprises: receiving means for receiving a paging request packet transmitted from a mobile node; determining means for determining a paging area, in response to the paging request packet received by the receiving means; notifying means for notifying the mobile node of the paging area determined by the determining means; and controlling means for controlling the paging area determined by the determining means.

A paging control apparatus manages paging areas by home-address of the mobile node, an assortment of algorithm, a lifetime and an area-list. In the area-list, the network prefix, IF address of AR(Access Router) or AP (Anchor Point) , AR address and the AP identifier (e.g. AR output port, MAC address) under this address are recorded. The variation of contents of the area-list is caused by the algorithm that forms the area.

A mobile node according to the present invention is a mobile node for performing transmission/reception of a packet to or from the paging control apparatus which carries out management of paging states and paging areas in accordance with a state of the mobile node, the mobile node comprising: setting means (corresponding to a timer described later) for setting a time from a start of a normal mode (an operation state according to MIP or an extended protocol thereof) to a transition into a paging control mode (an operation state according to IF paging); paging requesting means for transmitting a paging request packet to the paging control apparatus, in accordance with passage of the time set by the setting means; and forwarding ordering means for transmitting to a mobility control apparatus a BU packet to order forwarding of a data packet to the paging control apparatus, in accordance with the passage of the time set by the setting means.

A paging control system according to the present invention comprises the paging control apparatus, which carries out management of paging states and paging areas in accordance with a state of a mobile node, comprising: receiving means for receiving a paging request packet transmitted from a mobile node; determining means for determining a paging area, in response to the paging request packet received by the receiving means; notifying means for notifying the mobile node of the paging area determined by the determining means; and controlling means for controlling the paging area determined by the determining means, and the mobile node for performing transmission/reception of a packet to or from the paging control apparatus which carries out management of paging states and paging areas in accordance with a state of the mobile node, the mobile node comprising:

> setting means for setting a time from a start of a normal mode to a transition into a paging control mode; paging requesting means for transmitting a paging request packet to the paging control apparatus, in accordance with passage of the time set by the setting means; and forwarding ordering means for transmitting to a mobility control apparatus a BU packet to order forwarding of a data packet to the paging control apparatus, in accordance with the passage of the time set by the setting means, wherein the paging control apparatus receives the paging request packet transmitted from the mobile node.

A paging control method according to the present invention is a paging control method comprising the following steps carried out by a mobile node capable of operating according to a plurality of mobility management protocols: a selecting step wherein the mobile node selects a mobility management protocol to be operated, based on a communication state and an operation state of the mobile node; and a communication step wherein the mobile node performs transmission/reception of a data packet based on the mobility management protocol selected in the selecting step.

The paging control method according to the present invention can further comprise a paging control step wherein the mobile node detects a data packet directed to said mobile node and change the plurality of mobility management protocols based on the detection result.

The above-described paging control method preferably further comprises a first transition step wherein when the mobile node detects no data packet directed to the mobile node, transmitted or received via the mobility control apparatus for a predetermined time, the mobile node halts a normal mode and makes a transition into a paging control mode.

The paging control method according to the present invention may further comprise a determining step wherein the mobile node determines the predetermined time as a trigger for the transition into the paging control mode in the first transition step, using at least an average continuation time of the paging control mode in the past or an average occurrence interval of handoff.

The above-described paging control method can further comprise a second transition step wherein when the mobile node in the paging control mode detects transmission/reception of a data packet directed to the mobile node, via the mobility control apparatus, the mobile node halts the paging control mode and again makes a transition into the normal mode.

The invention described above is directed to transmission/reception of a data packet addressed to the mobile node, via the paging control apparatus, and the present invention can also be applied to transmission/reception of a data packet addressed to the mobile node, via a communication partner node. In this case, the communication partner node has the function similar to that of the above paging control apparatus.

Namely, above-mentioned paging control method may further comprise a third transition step wherein when the mobile mode does not detect transmission/reception of a data packet directed to said mobile node, via a communication partner node for a predetermined time, the mobile node halts a normal mode and makes a transition into a paging control mode.

The above-described paging control method may further comprise a fourth transition step wherein when the mobile node in the paging control mode detects transmission/reception of a data packet directed to the mobile node, via the communication partner node, the mobile node halts the paging control mode and again makes a transition into the normal mode.

According to these aspects of the invention, the mobile node monitors the communication state (a volume of packets transmitted or received, or the like) and the operation condition (a frequency of migrations or the like) of its own, and activates an appropriate mobility management protocol (e.g., IP paging) according to these states. For example, where the mobile node has a low volume of packets transmitted or received and a high migration frequency, the mobile node, together with the paging control apparatus or the communication partner node, determines a paging area. No path update is carried out on the occasion of migrations of the mobile node in this paging area and the mobility management except the IP paging is halted. Therefore, it becomes feasible to perform the appropriate paging control according to the communication state and the operation state of the mobile node, regardless of a type of a mobility management protocol used before a transition into the paging control mode (e.g., MIP or an extended protocol thereof).

More preferably, the paging control apparatus according to the present invention further comprises buffer controlling means for performing such a control as to make a buffer hold a data packet directed to the mobile node in a paging control mode.

More preferably, a paging control method according to the present invention is a paging control method comprising the following steps carried out by a paging control apparatus: a transmitting step wherein when the paging control apparatus detects a data packet directed to a mobile node having a paging area, the paging control apparatus transmits a paging notification packet directed to the mobile node, onto all forwarding paths in the paging area; a holding step wherein the paging control apparatus holds the data packet in a buffer until the paging control apparatus receives a paging notification confirmation packet from the mobile node; and a forwarding step wherein, after receiving the paging notification confirmation packet, the paging control apparatus forwards the data packet held in the holding step, to the mobile node through a forwarding path designated by the paging notification confirmation packet.

According to these aspects of the invention, a data packet transmitted from the mobility control apparatus to the mobile node is temporarily held (buffered) in the paging control apparatus and thereafter is forwarded through a predetermined path as triggered by reception of a paging notification confirmation packet from the mobile node. This substantializes secure transmission of packet without packet loss, even to the mobile node in paging.

The present invention enables execution of the appropriate paging control according to a communication state and an operation state of a mobile node.

The present invention will become more fully understood from the detailed description given herein below and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

BRIEF DESCRIPTION OF THE DRAWINGS

Fig. 1 is an illustration showing an example of mobility management protocols at the IP layer.

Fig. 2 is an illustration showing a functional configuration of a paging agent.

Fig. 3 is an illustration for explaining a transition process into a paging control mode and a restoration process to a normal mode.

Fig. 4 is an illustration for explaining a paging area determining process in the paging control mode.

Fig. 5 is an illustration for explaining a paging area update process in the paging control mode.

Fig. 6 is an illustration for explaining a normal mode restoration process in the paging control mode.

Fig. 7 is a state transition diagram at a mobile node.

Fig. 8 is an illustration for explaining an aspect of performing paging control between a mobile node and communication partner nodes.

Fig. 9 is an illustration showing an example of paging header which is applicable to the present invention.

Fig. 10 is an illustration showing an example of paging message which is applicable to the present invention.

DESCRIPTION OF THE PREFERRED EMBODIMENTS

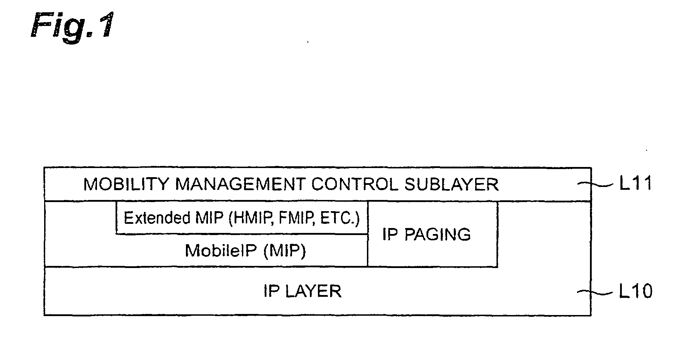

An embodiment of the present invention will be described below in detail with reference to the drawings. First, a structure of mobility management envisaged in the paging control apparatus according to the present invention will be described with reference to Fig. 1. As shown in Fig. 1, the IP paging exists as a broadly-defined mobility management protocol belonging to IF layer L10. The IF paging is a protocol existing alongside of Mobile IF (MIP), Extended MIP being an extended technology thereof, and so on. Examples of Extended MIP include Hierarchical Mobile IP (HMIP) and Fast Handover for Mobile IP (FMIP) .

Selection of a protocol in the present embodiment means a choice of a protocol between Mobile IP or the extended technology thereof, and the IP paging. In the present embodiment, an appropriate mobility management protocol is selected according to demands about permitted delay and packet loss, and the IP paging control is carried out depending upon the frequency of packet transmission/reception. Such protocol selection is carried out by mobility management control sublayer L11.

For example, where the mobile node operating in HMIP performs communication by an application severe about the permitted delay, the mobility management control sublayer L11 performs sessions by FMIP, depending upon application process monitoring or primitive issue. Conversely, it is also conceivable to adopt an implementation example in which when the mobility management control sublayer L11 determines that the number of retransmissions due to packet loss is large, the mobile node in operation by FMIP is made to operate by HMIP.

Subsequently, a configuration of a paging control system will be described. The paging control system is comprised of a mobile node (MN: Mobile Node 10), access routers (AR: Access Routers 21, 22), a paging agent (PA: Paging Agent 30), and a mobility agent (MA: Mobility Agent 40). The paging agent corresponds to the paging control apparatus as described in the scope of claims, and the mobility agent to the mobility control apparatus.

MN 10 has at least two operation states including a normal mode and a paging control mode. In the normal mode, MN 10 performs the operation of mobility management based on MIP or its extended technology implemented, and in the paging control mode MN 10 halts this operation and MN 10 is devoted to reception of packet and determines whether MN 10 is present in a paging area.

ARs 21, 22 are installed in their respective subnetworks different from each other, and transmit an RA (Router Advertisement) to MN 10 connected through a radio link.

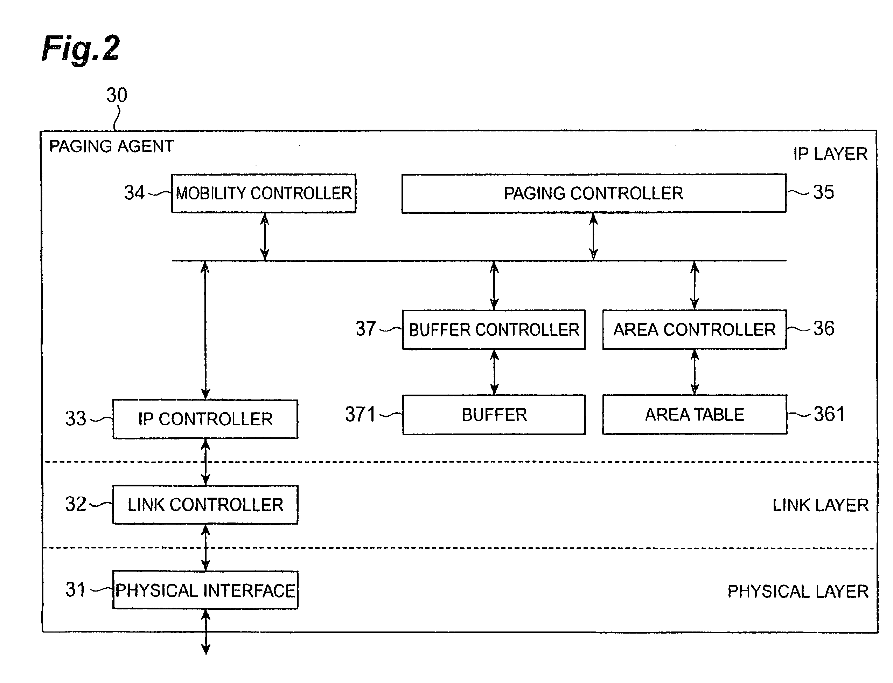

PA 30 creates a packet forwarding area and holds the area as a paging area. The paging area and an algorithm to determine this paging area are different in accordance with a communication state and an operation state of a mobile node. When PA 30 receives a data packet directed to MN 10 in paging control, it buffers the packet to hold it, and transmits a paging packet. Fig. 2 is an illustration showing a functional configuration of PA 30. As shown in Fig. 2, PA 30 has as well-known constituent elements, a physical interface 31 to operate at the physical layer, a link controller 32 to operate at the link layer, an IP controller 33 to operate at the IF layer, and a mobility controller 34.

Furthermore, PA 30 has a paging controller 35, an area controller 36, and a buffer controller 37 as constituent elements unique to the present invention. The paging controller 35 handles a paging control packet at the same layer as MIP. The area controller 36 creates a paging area with MN 10, thereafter notifies MN 10 of it, and holds the paging area information in an area table 361. The data held in the area table 361 is one or plural sub-network prefix that set for each home-address of MN 10. The buffer controller 37 performs such a control as to make a buffer 371 hold a data packet directed to MN 10 in paging control. An expiration date is set according to need for these paging area information and data packet, and data over the expiration date is erased according to instructions from the corresponding controller 36 or 37.

MA 40 is a node pursuant to a mobility management protocol such as MIP, HMIP, or FMIP, and, specifically, it corresponds to an HA (Home Agent), MAP (Mobile Anchor Point), FA (Foreign Agent), or the like.

Next, the operation of the paging control system will be described.

MN 10 detects a change of the subnet from a change of the network prefix value of PA in accordance with the mobility management control in the normal mode. MN 10 transmits a binding update packet (BU: Binding Update) to a corresponding mobility agent (e.g., MA 40) to carry out a path change process.

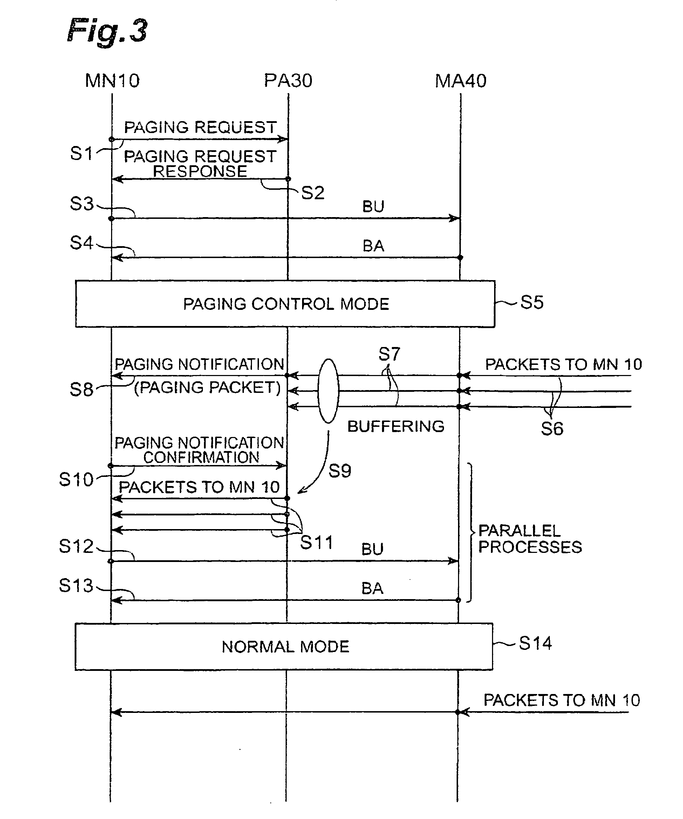

Fig. 3 is an illustration for explaining a transition process into the paging control mode and a restoration process to the normal mode. In Fig. 3, processing at AR to mediate communication between MN 10 and PA 30 is omitted for simplicity.

First, when determining that there is no data packet to be transmitted or received via MA 40, MN 10 transmits a paging request packet to PA 30 (S1).

When PA 30 permits the paging request from MN 10, it returns a paging request response packet accompanied by paging area information, to MN 10 (S2).

At the same time as the process of S1, MN 10 transmits a BU to make MA 40 forward a packet to PA 30, to MA 40 (S3) . MA 40 sends a BA (Binding Acknowledge) being an affirmative response to the BU, back to MN 10, and MN 10 receives it (S4). This causes MN 10 to make a transition into the paging control mode (S5).

Data packets directed to MN 10 in the paging control mode are temporarily held in a binding cache of MA 40 (S6) , and thereafter they are forwarded to PA 30 (S7). Receiving the data packets, PA 30 transmits a packet (paging packet) for notifying MN 10 of the arrival of data packets, toward the subnet of the paging area (S8). This results in sending the paging packet onto all forwarding paths in the above paging area. At the same time, PA 30 holds to buffer the data packets to MN 10 as successively forwarded (S9) .

When MN 10 in the paging control detects the paging packet directed to itself, it returns a paging notification confirmation packet to PA 30 (S10) . When receiving the paging notification confirmation packet from MN 10 in the paging control mode, PA 30 starts forwarding the data packets to MN 10 as buffered, via a predetermined forwarding path (S11). This permits the data packets to be delivered without loss, even to MN 10 in paging.

In parallel to the processes of S10 and S11, MN 10 also sends a BU to notify MA 40 of an address in the subnet where MN 10 is currently present, to MA 40 (S12) , MA 40 sends a BA being an affirmative response to the BU, back to MN 10, and MN 10 receives it (S13) . This causes MN 10 to be restored from the paging control mode to the normal mode (S14) .

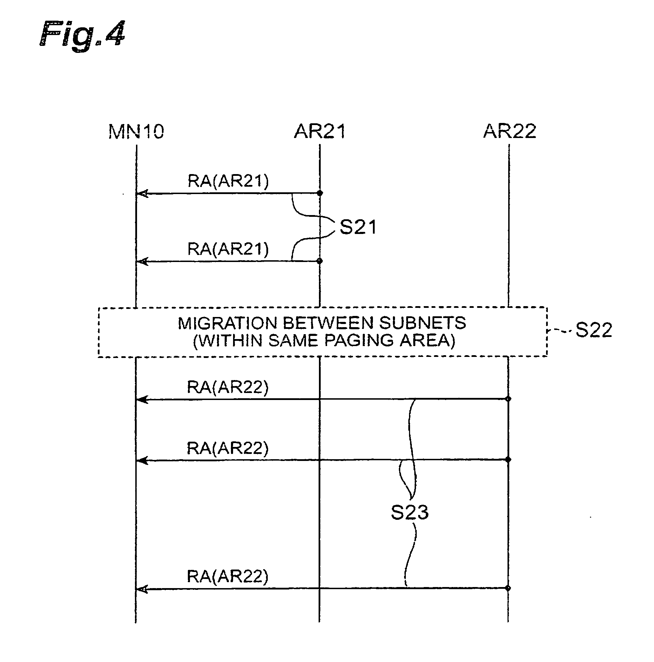

Fig. 4 is an illustration for explaining an area determining process in the paging control mode. MN 10 in the paging control performs determination of the paging area with reference to RA. Specifically, when MN 10, receiving RAs from AR 21 at S21, moves between different subnets in the same paging area (S22), it comes to receive RAs from AR 22 (S23). Since this causes a change of the network prefix value in RAs, MN 10 can detect a migration of itself between subnets. At this time, MN 10 in the paging control generates a c/o address (CoA: Care of Address) inside MN 10. However, MN 10 continuously stays in the paging control mode, without transmitting any packet to the other nodes including routers, different from the normal mode.

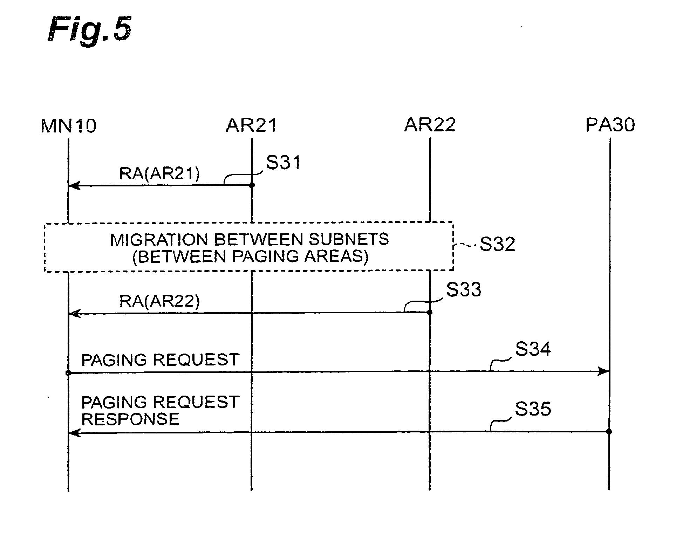

Fig. 5 is an illustration for explaining an area update process in the paging control mode. MN 10 in the paging control performs an update of the paging area with reference to RA. Specifically, when MN 10, receiving an RA from AR 21 at S31, moves between subnets in different paging areas (S32), it comes to receive an RA from AR 22 (S33) . Since it causes a change of the paging area indicated by the network prefix value in RA, MN 10 can detect the migration between paging areas.

When MN 10 determines that it has moved out of a paging area, it transmits a paging request packet to PA 30 (S34). Then MN 10 receives a paging request response packet from PA 30 (S35), and thereafter MN 10 creates a new paging area, and continuously stays in the previous paging control mode. This completes re-registration of paging between MN 10 and PA 30.

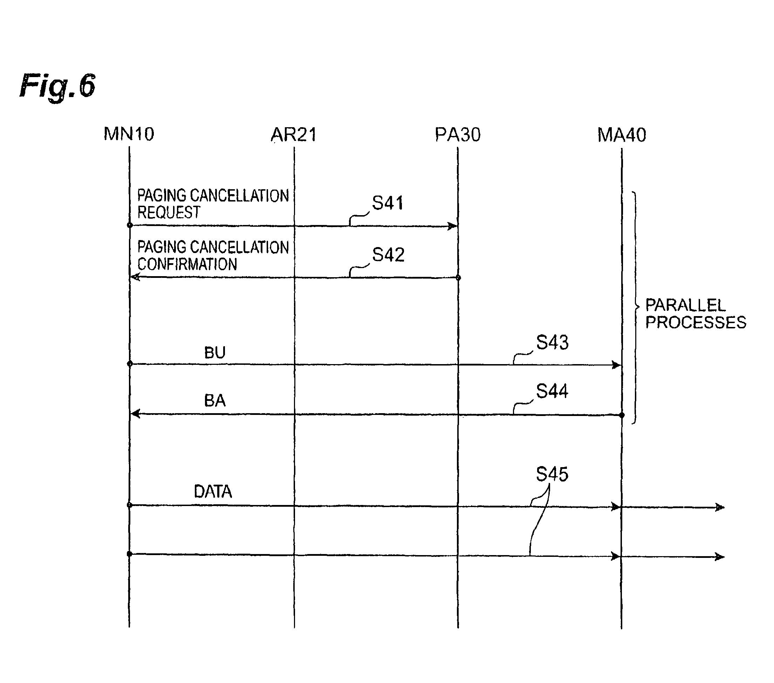

Furthermore, Fig. 6 is an illustration for explaining a restoration process from the paging control mode to the normal mode. When MN 10 in the paging control generates data packets to be transmitted via MA 40 by itself, it starts the restoration process to the normal mode. MN 10 sets a retention time of a paging registration cache to a sufficiently short time within a range where there occurs no state mismatch, and transmits a paging cancellation request packet to PA 30 (S41). . This cancels the registration of the paging control mode of MN 10, at PF. 30. At S42, PA 30 sends a paging cancellation confirmation packet back and MN 10 receives it.

In parallel to the processes of S41 and S42, MN 10 transmits a BU to establish a packet forwarding path, to MA 40 (S43), thereby registering the address in the subnet where MN 10 is present, at MA 40. At S44, MA 40 sends a BA back and MN 10 receives it. By this processing, MN 10 is restored to the normal mode and MN 10 starts transmitting the data packets according to a mobility management protocol implemented (S45).

Since PA 30 has no fixed management area as described above, it can reduce the burden of maintenance on the network operator.

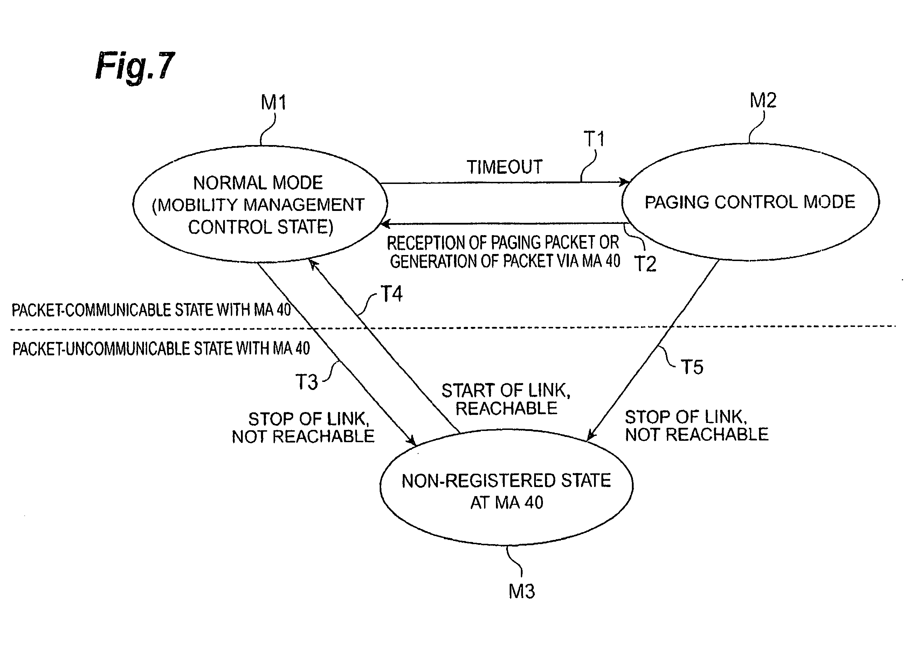

Transitions of MN 10 between modes will be described below with reference to Fig. 7. The scheme is based on the assumption that MN 10 has a packet-communicable state and an incommunicable state with MA 40. The communicable state refers to a state in which the setting of packet forwarding of MN 10 is active at MA 40. More specifically, it is a state in which a binding cache is retained. In contrast to it, the incommunicable state is a state in which the setting of packet forwarding of MN 10 is inactive, i.e., a state in which MN 10 is not registered at MA 40.

As shown in Fig. 7, the communicable state further comprises a normal mode M1 and a paging control mode M2. A transition from the normal mode M1 into the paging control mode M2 (T1) occurs as triggered by an event in which transmission/reception of data packet via MA 40 is not detected for a time interval predetermined by a timer of MN 10 (a timeout). On the other hand, MN 10 once having moved into the paging control mode M2 is restored to the normal mode M1 as triggered by either reception of a paging packet from PA 30 or generation of a packet via NIA 40 (T2).

When the number of control packets associated with the paging control satisfies conditional expression (1) below, we can expect reduction in the total number of control packets. This is because the total number of BU packets at a halt during the paging control becomes larger than the number of packets in the paging control at MN 10.

$$T_p \geq S_p / (S_b - (T_s S_a)/T_a) \cdot T_s \qquad (1)$$

In the above expression, the symbols are defined as follows:

$T_p$: average continuation time of the paging control mode,
$S_p$: the number of control packets involved in the paging control,
$S_b$: the number of path update packets necessary for mobility management control in the normal mode,

$T_s$: average occurrence interval of migration between subnets,
$T_a$: average time to migration out of a paging area,
$S_a$: the number of re-registration packets in conjunction with migration between paging areas.

The time and the number of packets as parameters of above-referenced expression (1) are managed by the paging controller 35. The setting time of the timer used in the transition into the paging control mode M2 is preferably controlled as follows. For example, where the continuation times of the paging control mode M2 in the most recent several transitions do not satisfy the above expression (1), the setting time is lengthened to decrease the frequency of transitions into the paging control mode M2. A time interval without transmission/reception of packet via MA 40 is measured in the normal mode M1 and this time interval is regarded as $T_p$. When this results in satisfying the above expression (1), the setting time of the timer is shortened to increase the frequency of transitions into the paging control mode M2.

Three ways are specifically given as the way that lengthens or shortens the setting time of the timer.

e.g.1) Long time and short time of the timer are set in advance.
e.g.2) In case the following expression (I) consists, a fixed rate (1/10) of $T_p$ is set to the short time of the timer, and in case the following expression (I) not consist, a fixed rate (10 times) of $T_p$ is set to the long time of the timer.
e.g.3) Paging control mode transition probability $P_{rob}$ is defined as $P_{rob}$ ($D_{mt} \geqq t$) that a paging mode state or a non-communication state is maintained for time t. It is assumed that this probability is based on exponential distribution or gamma distribution and paging mode transition timer is determined. In case the following expression (I) consists, $P_{rob}$ is set to a large value, and in case the following expression (I) not consist, $P_{rob}$ is set to a small value.

$$\mathrm{Prob}(\mathrm{Dmt} \geq t) = 1 - \int_0^t \frac{1}{b^c \cdot \Gamma(c)} x^{c-1} \exp\left(-\frac{x}{b}\right) dx \qquad \cdots \text{(I)}$$

In the above expression (I), a term in the integral symbol is a probability density function of gamma distribution. An average of the continuation times of the paging mode is equal to c*b.
"t" which gives above probability is calculated by Newton-Way and "t" is used as paging mode transition timer Td.
In that case, setting values further required are "c", and a parameter (e.g. tolerance, the number of maximum repeat times) for Newton-Way.
According to gamma distribution and Newton-way, it is possible that exponential distribution consists in case of "c=1" besides, it is good for imitation of occurrence interval of plural applications.

In the same way, when "t" counted backward from P rob ($D_{mt} \geqq t$) is $T_d$ (average value=b), following expressions (II), (III) consist.

$$\mathrm{Prob}(\mathrm{Dmt} \geq t) = \exp\left(-\frac{t}{b}\right) \qquad \cdots \text{(II)}$$

$$\mathrm{Td}(\mathrm{Prob}) = -b \cdot \ln \mathrm{Prob}(\mathrm{Dmt} \geq t) \qquad \cdots \text{(III)}$$

Since exponential distribution is used, calculation is simplified.

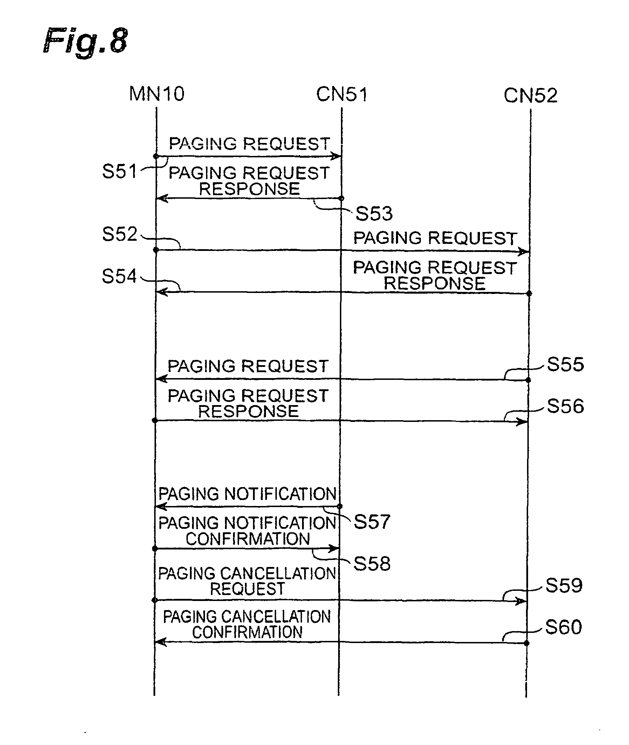

The aspect described in the above embodiment is just a preferred example of the paging control system according to the present invention, and the present invention is not limited to such aspect.
An aspect in which MN 10 directly executes the paging control with CNs (Correspondent Nodes) 51, 52 as communication partner nodes will be described below with reference to Fig. 8. The present aspect is similar to the aforementioned paging control technology described with Figs. 2 to 7, expect that CNs 51, 52 instead of PA 30 are used as paging control apparatus. Therefore, the detailed description of this aspect will be omitted, but MN 10 and CNs 51, 52 perform transmission/reception of packet without passage via MA 40, in order to accomplish optimization of path.

At a time of a transition into the paging control mode, MN 10 transmits a paging request packet to each of CN 51 and CN 52 described in the cache of MN 10 (S51, S52). At this time, MN 10 sets paging control information including a paging area, an intermittent reception period for power saving control, and so on. Thereafter, MN 10 receives paging request response packets sent back from the respective CNs 51, 52 (S53, S54). The transition into the paging control mode can also be carried out independently for each of the communication partner nodes (CN 51, CN 52).

Subsequently, after CN 52 makes a transition into the paging control mode, it transmits a paging request packet to MN 10 as a communication partner (S55). Since at this point MN 10 is also in the paging control mode, the paging request packet may be directly broadcast in the paging area, or a paging notification packet may be transmitted to MN 10 to once restore MN 10 to the normal mode. At S56, MN 10 transmits a paging request response packet to CN 52.

Furthermore, when a packet directed to MN 10 is generated at CN 51, CN 51 transmits a paging notification packet to MN 10, in order to page MN 10 (S57). MN 10 sends back a paging notification confirmation packet (S58).

MN 10 is restored to the mobility management control state being the normal mode and also sends a paging cancellation request packet to CN 52, in order to notify CN 52 of the change of the mode (S59). CN 52 sends a paging cancellation confirmation packet back (S60).

In the packet control system of the present embodiment, as described above, MN 10 always monitors the communication state such as the volume of packets transmitted or received and the operation state such as the migration frequency, and selects and activates an appropriate mobility management protocol according to change of these states. Particularly, in a case where the mobility management protocol is a protocol associated with the IP paging, the system appropriately implements the notification of initiation of paging to MN 10 and the control of the paging area (paging control). This permits MN 10, even in paging, to securely receive a data packet directed to itself, regardless of the transition between subnets or regardless of the transition between paging areas.

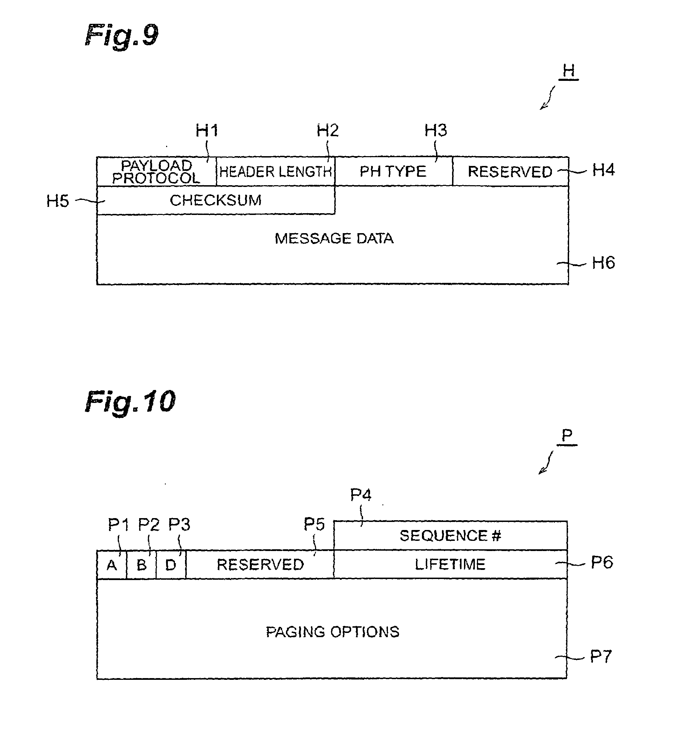

A Packet Format that is applicable to the above-mentioned embodiment will be exemplified below. The Packet Format is well-known technique in IPPv6, therefore won't be explained in detail but will be explained briefly. Fig. 9 is an illustration showing an example of paging header which is applicable to the present invention. In Fig. 9, Payload Protocol field H1 is a 8-bit field to discriminate a head part of the paging header and is also used to discriminate a protocol type. Header Length field H2 is a 8-bit field which shows data length of the paging header. PH type field H3 is a 8-bit field to discriminate a type of the paging header. Reserved field H4 is a data field that will be used for extension in future. Checksum field H5 is a 16-bit field to detect errors when the paging header is transmitted. And Message Data field H6 is a variable length field in which the above-described PH type data is stored.

Corresponding to the above paging header, DMR(Dormant Mode Request message), DMA (Dormant Mode Acknowledgement message), AMR (Active Mode Request message), AMA (Active Mode Acknowledgement message), and PR (Paging Request) are used for paging messages.

A Format of DMR will be representatively exemplified below as an example of paging message format. Fig. 10 is an illustration showing an example of the DMR. In Fig. 10, Acknowledge (A) field P1 is a field to require DMA to return to receipt of the DMR. Buffering (B) field P2 is a field to request a PA to store packets destined to a MN until the receipt of the AMR. Duplicate Address Detection (D) field P3 is a field to request a PA to detect duplicate address for Paging CoA. Sequence# field P4 is a 16-bit field to be used for matching a returned DMA with a sequence DMR. Reserved field P5 is a data field that will be used for extension in future. Lifetime field P6 is a 16-bit field in which the number of time units remaining before the binding is held. And Paging Options field P7 is a variable-length optional field in which zero or more TLV-encoded is stored.

The present invention is not limited to the above embodiments, but can also be suitably modified in various modification forms within the scope not departing from the spirit thereof. For example, the above embodiment exemplified the IP layer as a layer for the paging control, but the technology according to the present invention is not limited only to this example, but can also be applied to the transport layer (UDP (User Datagram Protocol) layer, TCP (Transmission Control Protocol) layer, etc.) and the application layer.

**Claims**

1. A paging control apparatus, which carries out management of paging states and paging areas in accordance with a state of a mobile node, comprising:

   receiving means for receiving a paging request packet transmitted from a mobile node to request a transition to a paging control mode; determining means for determining a paging area, in response to the paging request packet received by the receiving means;
   notifying means for notifying the mobile node of the paging area determined by the determining means;
   controlling means for controlling the paging area determined by the determining means ; transition means for causing the transition of the mobile node to the paging control mode; and transmitting means for transmitting paging packets onto forwarding paths in said paging areas in accordance with reception of data packets directed to said mobile node, and for forwarding the data packets as buffered to said mobile node in paging as triggered by return of a paging notification confirmation packet to the paging packets.

2. The paging control apparatus according to Claim 1, further comprising buffer controlling means for performing such a control as to make a buffer hold a data packet directed to the mobile node in a paging control mode.

3. A mobile node for performing transmission/reception of a packet to or from the paging control apparatus according to Claim 1 which is adapted to carry out management of paging states and paging areas in accordance with a state of the mobile node, the mobile node comprising:

setting means for setting a time from a start of a normal mode to a transition into a paging control mode;
paging requesting means for transmitting a paging request packet to the paging control apparatus to request a transition to a paging control mode, in accordance with passage of the time set by the setting means;
forwarding ordering means for transmitting to a mobility control apparatus a BU packet to order forwarding of a data packet to the paging control apparatus, in accordance with the passage of the time set by the setting means; and receiving means for returning a paging notification confirmation packet in accordance with reception of paging packets transmitted from said paging control apparatus in paging, and for forwarding said data packet buffered by said paging control apparatus.

4. A paging control system comprising a paging control apparatus, which is adapted to carry out management of paging states and paging areas in accordance with a state of a mobile node, comprising:

receiving means for receiving a paging request packet transmitted from a mobile node to request a transition to a paging control mode; determining means for determining a paging area, in response to the paging request packet received by the receiving means;
notifying means for notifying the mobile node of the paging area determined by the determining means;
controlling means for controlling the paging area determined by the determining means, transition means for causing the transition of the mobile node to the paging control mode; and
transmitting means for transmitting paging packets onto forwarding paths in said paging areas in accordance with reception of data packets directed to said mobile node, and for forwarding the data packets as buffered to said mobile node in paging as triggered by return of a paging notification confirmation packet to the paging packets, and the mobile node for performing transmission/reception of a packet to or from the paging control apparatus which is adapted to carry out management of paging states and paging areas in accordance with a state of the mobile node, the mobile node comprising:

setting means for setting a time from a start of a normal mode to a transition into a paging control mode;
paging requesting means for transmitting a paging request packet to the paging control apparatus to request a transition to a paging control mode, in accordance with passage of the time set by the setting means; and
forwarding ordering means for transmitting to a mobility control apparatus a BU packet to order forwarding of a data packet to the paging control apparatus, in accordance with the passage of the time set by the setting means; and receiving means for returning a paging notification confirmation packet in accordance with reception of paging packets transmitted from said paging control apparatus in paging, and for receiving forwarding of said data packet buffered by said paging control apparatus, wherein the paging control apparatus is operable to receive the paging request packet transmitted from the mobile node.

5. A paging control method comprising the following steps carried out by a paging control apparatus:

a receiving step for receiving a paging request packet transmitted from a mobile node to request a transition to a paging control mode;
a determining step for determining a paging area, in response to the paging request packet received by the receiving step;
a notifying step for notifying the mobile node of the paging area determined by the determining step;
a controlling step for controlling the paging area determined by the determining step;
a first transmitting step wherein a first transition step for causing the transition to the paging control mode; when the paging control apparatus detects a data packet directed to a mobile node having a paging area, the paging control apparatus transmits a paging notification packet directed to the mobile node, onto all forwarding paths in the paging area;
a holding step wherein the paging control apparatus holds the data packet in a buffer until the paging control apparatus receives a paging notification confirmation packet from the mobile node;
a forwarding step wherein, after receiving the paging notification confirmation packet, the paging control apparatus forwards the data packet held in the holding step, to the mobile node in paging through a forwarding path designated by the paging notification confirmation packet; and

a second transmitting step wherein the paging control apparatus transmits paging packets onto forwarding paths in said paging areas in accordance with reception of data packets directed to said mobile node and forwards the data packets as buffered to said mobile node in paging as triggered by return of a paging notification confirmation packet to the paging packets

6. A paging control method according to Claim 5, further comprising the following steps carried out by a mobile node capable of operating according to a plurality of mobility management protocols:

a selecting step wherein the mobile node selects a mobility management protocol to be operated, based on a communication state and an operation state of the mobile node; and

a communication step wherein the mobile node performs transmission/reception of a data packet based on the mobility management protocol selected in the selecting step.

7. The paging control method according to Claim 6, in which in the first transition step, when the mobile node detects no data packet directed to said mobile node, transmitted or received via the mobility control apparatus for a predetermined time, the mobile node halts a normal mode and makes the transition into a paging control mode.

8. The paging control method according to Claim 7, further comprising a second determining step wherein the mobile node determines the predetermined time as a trigger for the transition into the paging control mode in the first transition step, using at least an average continuation time of the paging control mode in the past or an average occurrence interval of handoff.

9. The paging control method according to Claim 7, further comprising a second transition step wherein when the mobile node in the paging control mode detects transmission/reception of a data packet directed to the mobile node, via a mobility control apparatus, the mobile node halts the paging control mode and again makes a transition into the normal mode.

10. The paging control method according to Claim 9, further comprising a third transition step wherein when the mobile node does not detect transmission/reception of a data packet directed to said mobile node, via a communication partner node for a predetermined time, said mobile node halts a normal mode and makes a transition into a paging control mode.

11. The paging control method according to Claim 10, further comprising a fourth transition step wherein when the mobile node in the paging control mode detects transmission/reception of a data packet directed to said mobile node, via the communication partner node, the mobile node halts the paging control mode and again makes a transition into the normal mode.

12. The paging control method according to Claim 6, further comprising a paging control step wherein the mobile node detects a data packet directed to said mobile node and changes the plurality of mobility management protocols based on the detection result.

**Patentansprüche**

1. Funkrufsteuerungsvorrichtung, welche die Verwaltung von Funkrufzuständen und Funkrufbereichen in Übereinstimmung mit einem Zustand eines mobilen Knotens durchführt, aufweisend:

Empfangsmittel zum Empfang eines Pakets einer Funkrufanforderung, das von einem mobilen Knoten gesendet wird, um einen Übergang in einen Funkrufsteuerungsmodus anzufordern,
Bestimmungsmittel, um einen Funkrufbereich als Reaktion auf das Paket zur Funkrufanforderung, welches durch das Empfangsmittel empfangen wurde, zu bestimmen;
Benachrichtigungsmittel, um den mobilen Knoten über den Funkrufbereich zu benachrichtigen, welcher durch das Bestimmungsmittel bestimmt wurde;
Steuerungsmittel, um den Funkrufbereich zu steuern, der durch das Bestimmungsmittel bestimmt wurde;
Übergangsmittel, um den Übergang des mobilen Knotens in den Funkrufsteuerungsmodus zu veranlassen; und
Sendemittel, um Funkrufpakete in den Funkrufbereichen in Übereinstimmung mit dem Empfang von Datenpaketen, die an den mobilen Knoten gerichtet sind, auf Weiterleitungswegen in den Funkrufbereichen zu senden, und zum Weiterleiten der Datenpakete, wie sie zwischengespeichert sind an den mobilen Knoten beim Funkrufen, wie ausgelöst durch das Zurücksenden eines Funkrufbenachrichtigungs-Bestätigungspakets auf die Funkrufpakete.

**2.** Funkrufsteuerungsvorrichtung nach Anspruch 1, weiter aufweisend Mittel zur Steuerung eines Zwischenspeichers, um eine derartige Steuerung durchzuführen, dass der Zwischenspeicher ein an den mobilen Knoten gerichtetes Datenpaket im Funkrufsteuerungsmodus zwischenspeichert.

**3.** Mobiler Knoten zur Durchführung des Sendens /Empfangens eines Pakets an oder von der Funkrufsteuerungsvorrichtung nach Anspruch 1, welche daran angepasst ist, die Verwaltung von Funkrufzuständen und Funkrufbereichen in Übereinstimmung mit einem Zustand des mobilen Knotens durchzuführen, wobei der mobile Knoten aufweist:
Einstellmittel zum Einstellen einer Zeit von einem Beginn eines normalen Modus bis zu einem Übergang zu einem Funkrufsteuerungsmodus;
Funkrufanforderungsmittel, um ein Paket zur Anforderung eines Funkrufs an die Funkrufsteuerungsvorrichtung zu senden, um einen Übergang zu einem Funkrufsteuerungsmodus anzufordern, in Übereinstimmung mit dem Verstreichen der Zeit, welche durch das Einstellmittel eingestellt wurde;
Weiterleitungsinstruktionsmittel, um an eine Mobilitätssteuerungsvorrichtung ein BU- Paket zu senden, um die Weiterleitung eines Datenpakets an die Funkrufsteuerungsvorrichtung anzuordnen, in Übereinstimmung mit dem Verstreichen der Zeit, die durch das Einstellmittel eingestellt wurde; und
Empfangsmittel, um ein Paket zur Bestätigung der Funkrufbenachrichtigung in Übereinstimmung mit dem Empfang von Funkrufpaketen, die von der Funkrufsteuerungsvorrichtung beim Funkrufen gesendet wurden, zurückzusenden, und um das Datenpaket, das in der Funkrufsteuerungsvorrichtung zwischengespeichert ist, weiterzuleiten.

**4.** Funkrufsteuerungssystem, das eine Funkrufsteuerungsvorrichtung aufweist, welche daran angepasst ist, die Verwaltung von Funkrufzuständen und Funkrufbereichen in Übereinstimmung mit einem Zustand eines mobilen Knotens durchzuführen, aufweisend:

Empfangsmittel zum Empfang eines Paketes für eine Funkrufanforderung, das von einem mobilen Knoten gesendet wird, um einen Übergang in einen Funkrufsteuerungsmodus anzufordern;
Bestimmungsmittel, um einen Funkrufbereich als Reaktion auf das Paket zur Funkrufanforderung zu bestimmen, das durch das Empfangsmittel empfangen wurde;
Benachrichtigungsmittel, um den mobilen Knoten über den Funkrufbereich, der durch das Bestimmungsmittel bestimmt wurde, zu benachrichtigen;
Steuerungsmittel, um den durch das Bestimmungsmittel bestimmten Funkrufbereich zu steuern,
Übergangsmittel, um den Übergang des mobilen Knotens in einen Funkrufsteuerungsmodus zu veranlassen; und
Sendemittel, um Funkrufpakete auf Weiterleitungswegen in den Funkrufbereichen in Übereinstimmung mit dem Empfang von Datenpaketen, die an den Mobilknoten gerichtet sind, weiterzuleiten, und zum Weiterleiten der Datenpakete, wie sie zwischengespeichert sind, an den mobilen Knoten beim Funkrufen, wie ausgelöst durch das Zurücksenden eines Pakets zur Bestätigung einer Funkrufbenachrichtigung auf die Funkrufpakete, und den mobilen Knoten, um das Senden/Empfangen eines Pakets zu oder von der Funkrufsteuerungsvorrichtung durchzuführen, welche daran angepasst ist, die Verwaltung von Funkrufzuständen und Funkrufbereichen in Übereinstimmung mit einem Zustand des mobilen Knotens durchzuführen, wobei der mobile Knoten aufweist:

Einstellmittel, um eine Zeit von einem Beginn eines Normalmodus bis zu einem Übergang in einen Funkrufsteuerungsmodus einzustellen;
Funkrufanforderungsmittel, um ein Paket zur Anforderung eines Funkrufes an die Funkrufsteuerungsvorrichtung zu senden, um den Übergang in einen Funkrufsteuerungsmodus anzufordern; in Übereinstimmung mit dem Verstreichen der Zeit, die durch das Einstellmittel eingestellt wurde; und
Weiterleitungsanordnungsmittel, um an eine Mobilitätssteuerungsvorrichtung ein BU- Paket zu senden, um die Weiterleitung eines Datenpakets an die Funkrufsteuerungsvorrichtung anzuordnen, in Übereinstimmung mit dem Verstreichen der Zeit, die durch das Einstellmittel eingestellt wurde; und
Empfangsmittel zum Zurücksenden eines Pakets zur Bestätigung einer Funkrufbenachrichtigung in Übereinstimmung mit dem Empfang von Funkrufpaketen, die von der Funkrufsteuerungsvorrichtung beim Funkrufen gesendet wurden, und zum Empfangen der Weiterleitung des Datenpakets, das durch die Funkrufsteuerungsvorrichtung zwischengespeichert wurde, worin die Funkrufsteuerungsvorrichtung betreibbar ist, um das Paket zur Anforderung eines Funkrufs, das vom mobilen Knoten gesendet wurde, zu empfangen.

**5.** Verfahren zur Funkrufsteuerung, das die folgenden Schritte aufweist, welche durch eine Funkrufsteuerungsvorrichtung ausgeführt werden:

einen Empfangsschritt, um ein Paket zur Anforderung eines Funkrufs zu empfangen, welches von einem mobilen Knoten gesendet wurde, um einen Übergang in einen Funkrufsteuerungsmodus anzufordern;
einen Bestimmungsschritt, um einen Funkrufbereich als Reaktion auf das Paket zur Anforderung eines Funkrufs zu bestimmen, das im Empfangsschritt empfangen wurde; einen Benachrichtigungsschritt, um den mobilen Knoten über den Funkrufbereich zu benachrichtigen, der im Bestimmungsschritt bestimmt wurde;
einen Steuerungsschritt, um den Funkrufbereich, der durch den Bestimmungsschritt bestimmt wurde, zu steuern;
einen ersten Übergangsschritt, um den Übergang in den Funkrufsteuerungsmodus zu veranlassen;
einen ersten Sendeschritt, worin, wenn die Funkrufsteuerungsvorrichtung ein Datenpaket, das an den mobilen Knoten gerichtet ist, welche einen Funkrufbereich aufweist, detektiert, die Funkrufsteuerungsvorrichtung ein an den mobilen Knoten gerichtetes Paket zur Benachrichtigung eines Funkrufs auf allen Weiterleitungswegen im Funkrufbereich sendet;
einen Halteschritt, in dem die Funkrufsteuerungsvorrichtung ein Datenpaket in einem Zwischenspeicher hält, bis die Funkrufsteuerungsvorrichtung ein Paket zur Bestätigung der Funkrufbenachrichtigung vom mobilen Knoten empfängt;
einen Weiterleitungsschritt, worin nach dem Empfang des Pakets zur Bestätigung der Funkrufbenachrichtigung die Funkrufsteuerungsvorrichtung das Datenpaket, das im Halteschritt gehalten wurde, an den mobilen Knoten beim Funkrufen über einen Weiterleitungsweg sendet, der durch das Paket zur Bestätigung der Funkrufbenachrichtigung bestimmt ist; und
einen zweiten Sendeschritt, in dem die Funkrufsteuerungsvorrichtung Funkrufpakete auf Weiterleitungswegen in den Funkrufbereichen in Übereinstimmung mit dem Empfang von Datenpaketen, die an den mobilen Knoten gerichtet sind, sendet und die Datenpakete, wie zwischengespeichert, an den mobilen Knoten beim Funkrufen sendet, wie ausgelöst durch das Zurücksenden eines Pakets zur Bestätigung der Funkrufbenachrichtigung auf die Funkrufpakete.

**6.** Funkrufsteuerungsverfahren nach Anspruch 5, weiter aufweisend die folgenden Schritte, welche durch einen mobilen Knoten ausgeführt werden, der in der Lage ist, gemäß einer Vielzahl von Mobilitätsverwaltungsprotokollen betrieben zu werden:

einen Auswahlschritt, in dem der mobile Knoten ein Mobilitätsverwaltungsprotokoll auswählt, das betrieben werden soll, basierend auf einem Kommunikationszustand und einem Betriebszustand des mobilen Knotens; und
einen Kommunikationsschritt, in dem der mobile Knoten das Senden/Empfangen eines Datenpakets basierend auf dem Mobilitätsverwaltungsprotokoll durchführt, das im Auswahlschritt ausgewählt wurde.

**7.** Das Funkrufsteuerungsverfahren nach Anspruch 6, bei dem im ersten Sendeschritt, wenn der mobile Knoten kein Datenpaket, das an den mobilen Knoten gerichtet ist, detektiert, welches über die Mobilitätssteuerungsvorrichtung für einen bestimmten Zeitraum gesendet oder empfangen wird, der mobile Knoten einen normalen Modus beendet und den Übergang in einen Funkrufsteuerungsmodus durchführt.

**8.** Das Funkrufsteuerungsverfahren nach Anspruch 7, weiter aufweisend einen zweiten Bestimmungsschritt, in dem der mobile Knoten die vorbestimmte Zeit als Auslöser für den Übergang in den Funkrufsteuerungsmodus im ersten Sendeschritt detektiert, unter Verwendung wenigstens einer mittleren Fortführungszeit des Funkrufsteuerungsmodus in der Vergangenheit oder eines mittleren auftretenden Zeitabschnitts für die Übergabe.

**9.** Das Funkrufsteuerungsverfahren nach Anspruch 7, weiter aufweisend einen zweiten Übergangsschritt, in dem, wenn der mobile Knoten im Funkrufsteuerungsmodus das Senden /Empfangen eines an den mobilen Knoten gerichteten Datenpakets über eine Mobilitätssteuerungsvorrichtung detektiert, der mobile Knoten den Funkrufsteuerungsmodus beendet und wiederum einen Übergang in den normalen Modus durchführt.

**10.** Das Funkrufsteuerungsverfahren nach Anspruch 9, weiter aufweisend einen dritten Übergangsschritt, worin, wenn der mobile Knoten das Senden /Empfangen eines an den mobilen Knoten gerichteten Datenpakets über einen Kommunikationspartnerknoten für einen bestimmten Zeitraum nicht detektiert, der mobile Knoten einen normalen Modus beendet und einen Übergang in einen Funkrufsteuerungsmodus durchführt.

**11.** Das Funkrufsteuerungsverfahren nach Anspruch 10, weiter aufweisend einen vierten Übergangsschritt, worin, wenn der mobile Knoten im Funkrufmodus das Senden/Empfangen von einem an den mobilen Knoten gerichteten Datenpaket über den Kommunikationspartnerknoten detektiert, der mobile Knoten den Funkrufsteuerungsmodus beendet und wiederum einen Übergang in den normalen Modus durchführt.

**12.** Das Funkrufsteuerungsverfahren nach Anspruch 6, weiter aufweisend einen Funkrufsteuerungsschritt, in dem der mobile Knoten ein an den mobilen Knoten gerichtetes Datenpaket detektiert und die Vielzahl der Mobilitätsverwaltungsprotokolle basierend auf dem Ergebnis der Detektion ändert.

**Revendications**

**1.** Appareil de gestion de téléappels qui exécute une gestion d'états de téléappels et de zones de téléappels en accord avec un état d'un noeud mobile, l'appareil comprenant :

des moyens de réception pour recevoir un paquet de demande de téléappel transmis à partir d'un noeud mobile afin de demander une transition à un mode de gestion de téléappels ;
des moyens de détermination pour déterminer une zone de téléappel en réponse au paquet de demande de téléappel reçu par les moyens de réception ;
des moyens de notification pour notifier au noeud mobile la zone de téléappel déterminée par les moyens de détermination ;
des moyens de gestion pour gérer la zone de téléappel déterminée par les moyens de détermination ;
des moyens de transition pour occasionner la transition du noeud mobile au mode de gestion de téléappels ; et
des moyens de transmission pour transmettre des paquets de téléappels sur des chemins de transfert dans lesdites zones de téléappels en accord avec une réception de paquets de données dirigés vers ledit noeud mobile, et pour transférer les paquets de données mis en tampon vers ledit noeud mobile par téléappels déclenchés par le retour d'un paquet de confirmation de notification de téléappel vers les paquets de téléappels.

**2.** Appareil de gestion de téléappels selon la revendication 1, comprenant par ailleurs des moyens de gestion de tampon pour exécuter une gestion telle qu'elle amène un tampon à maintenir un paquet de données dirigé vers le noeud mobile dans un mode de gestion de téléappels.

**3.** Noeud mobile permettant de réaliser la transmission / réception d'un paquet vers ou depuis l'appareil de gestion de téléappels selon la revendication 1, qui est adapté pour exécuter une gestion d'états de téléappels et de zones de téléappels en accord avec un état du noeud mobile, le noeud mobile comprenant ;

des moyens de définition pour définir une période de temps entre un début d'un mode normal et une transition à un mode de gestion de téléappels ;
des moyens de demande de téléappel pour transmettre un paquet de demande de téléappel vers l'appareil de gestion de téléappels, dans le but de demander une transition à un mode de gestion de téléappels, en accord avec un écoulement de la période de temps définie par les moyens de définition;
des moyens de commande de transfert pour transmettre, vers un appareil de gestion de mobilité, un paquet BU, dans le but de commander un transfert d'un paquet de données vers l'appareil de gestion de téléappels, en accord avec l'écoulement de la période de temps définie par les moyens de définition ; et
des moyens de réception pour retourner un paquet de confirmation de notification de téléappel en accord avec une réception de paquets de téléappels transmis à partir dudit appareil de gestion de téléappels par téléappels, et pour transférer ledit paquet de données mis en tampon par ledit appareil de gestion de téléappels.

**4.** Système de gestion de téléappels comprenant un appareil de gestion de téléappels qui est adapté pour exécuter une gestion d'états de téléappels et de zones de téléappels en accord avec un état d'un noeud mobile, le système comprenant :

des moyens de réception pour recevoir un paquet de demande de téléappel transmis à partir d'un noeud mobile afin de demander une transition à un mode de gestion de téléappels ;
des moyens de détermination pour déterminer une zone do téléappel en réponse au paquet de demande de téléappel reçu par les moyens de réception ;
des moyens de notification pour notifier au noeud mobile la zone de téléappel déterminée par les moyens de détermination ;
des moyens de gestion pour gérer la zone de téléappel déterminée par les moyens de détermination ;

des moyens de transition pour occasionner la transition du noeud mobile au mode de gestion de téléappels ; et des moyens de transmission pour transmettre des paquets de téléappels sur des chemins de transfert dans lesdites zones de téléappels en accord avec une réception de paquets de données dirigés vers ledit noeud mobile, et pour transférer les paquets de données mis en tampon vers ledit noeud mobile par téléappels déclenchés par le retour d'un paquet de confirmation de notification de téléappel vers les paquets de téléappels, et le noeud mobile permettant de réaliser la transmission / réception d'un paquet vers ou depuis l'appareil de gestion de téléappels qui est adapté pour exécuter une gestion d'états de téléappels et de zones de téléappels en accord avec un état du noeud mobile, le noeud mobile comprenant :

des moyens de définition pour définir une période de temps entre un début d'un mode normal et une transition un mode de gestion de téléappels ;
des moyens de demande de téléappel pour transmettre un paquet de demande de téléappel vers l'appareil de gestion de téléappels, dans le but de demander une transition à un mode de gestion de téléappels, en accord avec un écoulement de la période de temps définie par les moyens de définition ; et
des moyens de commande de transfert pour transmettre, vers un appareil de gestion de mobilité, un paquet BU, dans le but de commander un transfert d'un paquet de données vers l'appareil de gestion de téléappels, en accord avec l'écoulement de la période de temps définie par les moyens de définition ; et
des moyens de réception pour retourner un paquet de confirmation de notification de téléappel en accord avec une réception de paquets de téléappels transmis à partir dudit appareil de gestion de téléappels par téléappels, et pour recevoir un transfert dudit paquet de données mis en tampon par ledit appareil de gestion de téléappels,
dans lequel l'appareil de gestion de téléappels peut être utilisé afin de recevoir le paquet de demande de téléappel transmis à partir du noeud mobile.

5. Procédé de gestion de téléappels comprenant les étapes suivantes accomplies par un appareil de gestion de téléappels :

une étape de réception pour recevoir un paquet de demande de téléappel transmis à partir d'un noeud mobile afin de demander une transition à un mode de gestion de téléappels ;
une étape de détermination pour déterminer une zone de téléappel en réponse au paquet de demande de téléappel reçu au cours de l'étape de réception ;
une étape de notification pour notifier au noeud mobile la zone de téléappel déterminée au cours de l'étape de détermination ;
une étape de gestion pour gérer la zone de téléappel déterminée au cours de l'étape de détermination ;
une première étape de transition pour occasionner la transition au mode de gestion de téléappels ;
une première étape de transmission au cours de laquelle, quand l'appareil de gestion de téléappels détecte un paquet de données dirigé vers un noeud mobile ayant une zone de téléappel, l'appareil de gestion de téléappels transmet un paquet de notification de téléappels dirigé vers le noeud mobile, sur la totalité des chemins de transfert dans la zone de téléappel ;
une étape de maintien au cours de laquelle l'appareil de gestion de téléappels maintient le paquet de données dans un tampon jusqu'à ce que l'appareil de gestion de téléappels reçoive un paquet de confirmation de notification de téléappel en provenance du noeud mobile ;
une étape de transfert au cours de laquelle, après réception du paquet de confirmation de notification de téléappel, l'appareil de gestion de téléappels transfère le paquet de données maintenu au cours de l'étape de maintien, vers le noeud mobile par téléappels sur un chemin de transfert désigné par le paquet de confirmation de notification de téléappel ; et
une deuxième étape de transmission au cours de laquelle l'appareil de gestion de téléappels transmet des paquets de téléappels sur des chemins do transfert dans lesdites zones de téléappels en accord avec une réception de paquets de données dirigés vers ledit noeud mobile, et transfère les paquets de données mis en tampon vers ledit noeud mobile par téléappels déclenchés par le retour d'un paquet de confirmation de notification de téléappel vers les paquets de téléappels.

6. Procédé de gestion de téléappels selon la revendication 5, comprenant par ailleurs les étapes suivantes accomplies par un noeud mobile qui est apte à fonctionner en accord avec une pluralité de protocoles de gestion de mobilité : une étape de sélection au cours de laquelle le noeud mobile sélectionne un protocole de gestion de mobilité à utiliser, en se basant sur un état de communication et sur un état de fonctionnement du noeud mobile ; et une étape de communication au cours de laquelle le noeud mobile accomplit la transmission / réception d'un paquet de données en se basant sur le protocole de gestion de mobilité sélectionné au cours de l'étape de sélection.

**7.** Procédé de gestion de téléappels selon la revendication 6 dans lequel, au cours de la première étape de transition, quand le noeud mobile ne détecte aucun paquet de données dirigé vers ledit noeud mobile, transmis ou reçu par l'intermédiaire de l'appareil de gestion de mobilité au cours d'une période de temps prédéterminée, le noeud mobile interrompt un mode normal et accomplit la transition à un mode de gestion de téléappels.

**8.** Procédé de gestion de téléappels selon la revendication 7, comprenant par ailleurs une deuxième étape de détermination au cours de laquelle le noeud mobile détermine la période de temps prédéterminée comme un déclencheur pour la transition au mode de gestion de téléappels au cours de la première étape de transition, en utilisant au moins une période de temps de continuation moyenne du mode de gestion de téléappels dans le passé, ou un intervalle de survenue moyen d'un transfert intercellulaire.

**9.** Procédé de gestion de téléappels selon la revendication 7, comprenant par ailleurs une deuxième étape de transition au cours de laquelle, quand le noeud mobile dans le mode de gestion de téléappels détecte la transmission / réception d'un paquet de données dirigé vers le noeud mobile, par l'intermédiaire d'un appareil de gestion de mobilité, le noeud mobile interrompt le mode de gestion de téléappels et accomplit à nouveau une transition au mode normal.

**10.** Procédé de gestion de téléappels selon la revendication 9 comprenant par ailleurs une troisième étape de transmission au cours de laquelle, quand le noeud mobile ne détecte aucune transmission / réception d'un paquet de données dirigé vers ledit noeud mobile par l'intermédiaire d'un noeud partenaire de communication au cours d'une période de temps prédéterminée, ledit noeud mobile interrompt un mode normal et accomplit une transition à un mode de gestion de téléappels.

**11.** Procédé de gestion de téléappels selon la revendication 10, comprenant par ailleurs une quatrième étape de transition au cours de laquelle, quand le noeud mobile dans le mode de gestion de téléappels détecte la transmission / réception d'un paquet de données dirigé vers le noeud mobile, par l'intermédiaire du noeud partenaire de communication, le noeud mobile interrompt le mode de gestion de téléappels et accomplit à nouveau une transition au mode normal.

**12.** Procédé de gestion de téléappels selon la revendication 6, comprenant par ailleurs une étape de gestion de téléappels au cours de laquelle le noeud mobile détecte un paquet de données dirigé vers ledit noeud mobile et modifie la pluralité de protocoles de gestion de mobilité en se basant sur le résultat de la détection.

**Fig.1**

| MOBILITY MANAGEMENT CONTROL SUBLAYER | | | L11 |
| --- | --- | --- | --- |
| Extended MIP (HMIP, FMIP, ETC.) | IP PAGING | | |
| MobileIP (MIP) | | | |
| IP LAYER | | | L10 |

**Fig.2**

PAGING AGENT ... IP LAYER

34 — MOBILITY CONTROLLER

PAGING CONTROLLER — 35

37 — BUFFER CONTROLLER    AREA CONTROLLER — 36

33 — IP CONTROLLER    371 — BUFFER    AREA TABLE — 361

32 — LINK CONTROLLER ... LINK LAYER

31 — PHYSICAL INTERFACE ... PHYSICAL LAYER

30

EP 1 484 863 B1

# Fig.3

```
        MN10              PA30              MA40

          │    PAGING REQUEST  │               │
    S1 ───┤                    ┤               │
          │  PAGING REQUEST    │               │
          │     RESPONSE       │               │
    S3 ───┤◀───────────────────┤               │
          │              S2 ───┘               │
          │                    │      BU       │
    S3 ───┤────────────────────┼──────────────▶│
          │                    │               │
    S4 ───┤                    │      BA       │
          │◀───────────────────┼───────────────┤
          │                    │               │

    ┌──────────────────────────────────────────┐
    │           PAGING CONTROL MODE             │ ─── S5
    └──────────────────────────────────────────┘

          │ PAGING NOTIFICATION│      S7       │
          │◀───────────────────┤◀──────┐  PACKETS TO MN 10
    S8 ───┤ (PAGING PACKET)    │◀──────┤◀──────┤
          │                    │◀──────┤◀──────┤
          │                    │   BUFFERING   │ S6
          │                    │               │
          │ PAGING NOTIFICATION│               │
          │    CONFIRMATION    │               │
   S10 ───┤────────────────────▶│  S9          │      ┐
          │ PACKETS TO MN 10   │              │      │
          │◀───────────────────┤              │      │ PARALLEL
          │◀───────────────────┤              │      │ PROCESSES
          │◀───────────────────┤ S11          │      │
   S12 ───┤                    │      BU       │      │
          │────────────────────┼──────────────▶│      │
   S13 ───┤                    │      BA       │      │
          │◀───────────────────┼───────────────┤      ┘

    ┌──────────────────────────────────────────┐
    │              NORMAL MODE                  │ ─── S14
    └──────────────────────────────────────────┘

          │                    │ PACKETS TO MN 10
          │◀───────────────────┼───────────────┤
          │                    │               │
```

## Fig.4

MN10      AR21      AR22

RA(AR21)

S21

RA(AR21)

MIGRATION BETWEEN SUBNETS
(WITHIN SAME PAGING AREA)   S22

RA(AR22)

RA(AR22)

S23

RA(AR22)

# Fig.5

| MN10 | AR21 | AR22 | PA30 |
|------|------|------|------|

RA(AR21) ⟵ S31

```
┌─────────────────────────────────────────┐
│   MIGRATION BETWEEN SUBNETS              │ ⋯ S32
│   (BETWEEN PAGING AREAS)                 │
└─────────────────────────────────────────┘
```

RA(AR22) ⟵ S33

PAGING REQUEST ⟶ S34

PAGING REQUEST
RESPONSE ⟵ S35

*Fig.6*

## Fig.7

# Fig.8

# Fig.9

H

|  | H1 | H2 | H3 |  |
|---|---|---|---|---|
| PAYLOAD PROTOCOL | HEADER LENGTH | PH TYPE | RESERVED | — H4 |

H5 — | CHECKSUM |

| MESSAGE DATA |

— H6

# Fig.10

P

|  |  |  |  | P4 |  |
|---|---|---|---|---|---|
| P1 | P2 | P3 | P5 | SEQUENCE # |  |
| A | B | D | RESERVED | LIFETIME | — P6 |

| PAGING OPTIONS |

— P7

**REFERENCES CITED IN THE DESCRIPTION**

**Patent documents cited in the description**

- US 20020046287 A1